(19)

**Europäisches Patentamt**
**European Patent Office**
**Office européen des brevets**

(11) **EP 1 902 801 B1**

(12) **EUROPÄISCHE PATENTSCHRIFT**

(45) Veröffentlichungstag und Bekanntmachung des Hinweises auf die Patenterteilung:
**12.08.2009 Patentblatt 2009/33**

(51) Int Cl.:
*B23B 47/28* (2006.01) *B23B 51/00* (2006.01)

(21) Anmeldenummer: **07018118.5**

(22) Anmeldetag: **14.09.2007**

(54) **Vorrichtung zum Bohren eines Loches mit konischem Hinterschnitt**

Device for drilling a hole with conical undercut

Dispositif destiné à percer un trou avec une coupe arrière conique

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.09.2006 DE 102006044815**

(43) Veröffentlichungstag der Anmeldung:
**26.03.2008 Patentblatt 2008/13**

(73) Patentinhaber: **Tox-Dübel-Werk R.W. Heckhausen GmbH & Co. KG**
**72505 Krauchenwies-Ablach (DE)**

(72) Erfinder:
• **Burger, Klaus**
**8862 Überlingen-Nussdorf (DE)**

• **Schmid, Dieter**
**78333 Stockach (DE)**
• **Karotsch, Bernd**
**78351 Bodman-Ludwigshafen (DE)**
• **Johnen, Uwe**
**78224 Singen (DE)**

(74) Vertreter: **Koch, Günther et al**
**Garmischer Strasse 4**
**80339 München (DE)**

(56) Entgegenhaltungen:
**AT-B- 343 879 DE-A1- 2 743 778**
**DE-A1- 4 121 621 US-A- 5 915 891**
**US-A1- 2006 133 902**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Vorrichtung zum Bohren eines Loches mit konischem Hinterschnitt. Insbesondere, aber nicht ausschließlich, bezieht sich die Erfindung auf eine Bohrhilfe für Porenbeton, mit der in einer Wand aus Porenbeton ein kontrollierter Hinterschnitt mittels eines handelsüblichen Bohrers erzeugt werden kann. Zur Verankerung von Gegenständen an einer Wand aus Porenbeton erweisen sich vielfach die in verschiedensten Ausführungen bekannt gewordenen Spreizdübel nicht immer als befriedigend, weil beim Eintreiben einer Spreizschraube die Bohrlochwandung ausbrechen kann, was eine sichere Verankerung des Dübels im Porenbeton ausschließt.

Zur Verankerung, insbesondere schwerer Gegenstände, an Wänden aus Porenbeton verwendet man daher häufig ein Verbundmörtel-Injektionssystem, bei dem eine Mörtelmasse, beispielsweise aus Vinylesterharz oder Polyesterharz, in ein vorgebohrtes Loch injiziert wird. In diese noch nicht erstarrte Mörtelmasse wird ein Verankerungsglied, beispielsweise eine Gewindestange, eingesetzt, und bei der Aushärtung geht die Mörtelmasse mit dem Porenbeton einen Verbund ein, was jedoch nicht ausschließt, dass bei Verwendung zylindrischer Bohrlöcher und hohen Zugkräften ein Abscheren entlang der Bohrlochwandung erfolgen kann. Aus diesem Grund ist es üblich, das Bohrloch mit einem Hinterschnitt zu versehen, durch den sich mit zunehmender Tiefe eine Vergrößerung des Querschnitts ergibt, so dass ein in eine solche Hinterschnittbohrung eingespritzter Verbundmörtel nach seiner Aushärtung einen Keil bildet, der den Ausziehwiderstand beträchtlich erhöht.

Das freihändige Einbohren eines konisch hinterschnittenen Bohrlochs erfordert eine erhebliche Sorgfalt und Übung, wobei auch die Gefahr besteht, dass die Bohrung im unmittelbaren Wandbereich unnötigerweise aufgeweitet wird. Es ist daher üblich, als Bohrhilfe eine Unterlegscheibe zu benutzen, die an der Wand festgelegt wird und durch deren Loch ein Spiralbohrer geführt wird, der um die Ringkante der Unterlegscheibe mit zunehmendem Konuswinkel gekippt wird, so dass sich durch ein "Herumrühren" im Bohrloch ein Hinterschnitt ergibt. Hierdurch wird zwar ein ungewolltes Aufweiten am Bohrlocheintritt verhindert, jedoch muss auch hier der Flankenwinkel freihändig durch Kippen am Lochrand der Unterlegscheibe eingestellt werden.

Es ist bekannt, zur Herstellung von Hinterschnittbohrungen spezielle Bohrer zu verwenden, die beispielsweise in einer vorbestimmten Bohrlochtiefe seitlich Schneiden ausfahren, mit denen beliebig geformte Hinterschnitte ausgeführt werden können.

Eine bekannte Bohreinheit, die in der AT 343 879B beschrieben ist, weist einen Spezialbohrer mit seitlich über den Bohrerdurchmesser vorstehenden Bohrblättern aus Hartmetall auf. Auf den Bohrschaft muss ein Anschlagbund aufgeklemmt werden, der in einer Mulde einer über den Bohrschaft geschobenen und an der Wandoberfläche aufliegenden Anschlagplatte zur Bildung eines Schwenklagers abstützbar ist, das jedoch keinen definierten Flankenwinkel gewährleisten kann.

Die DE-OS 27 43 778 betrifft die Herstellung eines zum Bohrlochgrund hin erweiterten Bohrloches. Dabei wird in ein vorgebohrtes Loch in der Wand eine Muffe eingesetzt, und durch Verkanten eines Stechwerkzeuges, z.B. eines Schraubendrehers, in der Innenbohrung der Muffe und durch Stoßbewegungen wird die Bohrlocherweiterung ausgeschabt. Dies erfordert eine aufwändige, sachkundige Handarbeit, wobei die Form des erreichten Hinterschnitts nicht definiert und überprüft werden kann.

Der Erfindung liegt daher die Aufgabe zugrunde, eine Bohrhilfe zu schaffen, mit der unter Verwendung einer handelsüblichen Bohrmaschine und eines handelsüblichen Spiralbohrers eine Bohrung mit einem definierten konischen Hinterschnitt hergestellt werden kann, indem der Bohrer formschlüssig geführt nur bis zu einem bestimmten Konuswinkel schräggestellt werden kann.

Gelöst wird die gestellte Aufgabe durch die Gesamtheit der im Patentanspruch 1 angegebenen Merkmale.

Die Herstellung der Hinterschnittbohrung wird dadurch bewirkt, dass ein an den Führungswänden angelegter Bohrer in seiner maximalen, den Konuswinkel bestimmenden Schrägstellung definitiv begrenzt wird, weil der Bohrer jeweils an zwei diametral gegenüberliegenden Stellen von oberem und unterem Konusabschnitt der Führungswand zur Anlage kommt.

Voraussetzung für eine genaue Hinterschnittbohrung ist lediglich eine entsprechende Anpassung des Durchmessers des Bohrers an den Durchmesser der Durchgangsbohrung der Anlageplatte, bzw. eine Anpassung im umgekehrten Sinn. So sollte der Bohrer im Idealfall der Durchgangsbohrung der Anlageplatte in der Weise angepaßt sein, wie es der elliptische Horizontalschnitt des schräggestellten Bohrers erfordert.

Anstelle von kreisrunden Querschnitten der Führungswände sind zur Herstellung spezieller Hinterschnittbohrungen auch polygonale oder schlitzförmige Wandungen denkbar.

Gemäß einem weiteren Merkmal der Erfindung kann die erfindungsgemäße Vorrichtung mit einer Kontrolleinrichtung ausgestattet werden, die gewährleistet, dass festgestellt werden kann, ob der Bohrer über den vollen Umfang der Führungswand bewegt worden ist. Diese Kontrollvorrichtung kann aus Markierungen, zum Beispiel Rippen oder Farbaufträgen bestehen, die beim bestimmungsgemäßen Führen des Spiralbohrers abgeschliffen werden und stehenbleiben, falls ein bestimmter Winkelausschnitt nicht bestrichen wurde. Diese Markierungen können erneut aufgebracht werden.

Die erfindungsgemäße Vorrichtung kann mit anderen Werkzeugen, beispielsweise einem Lineal oder einer Wasserwaage vereinigt werden, die bei der Herstellung von Wandbohrungen benötigt werden. Es ist auch möglich, die Vorrichtung so auszubilden, dass sie in Führungsschienen derartiger Werkzeuge eingefügt werden kann.

Die erfindungsgemäße Vorrichtung kann entweder aus Metall oder einem harten Kunststoff bestehen.

Versuche in Verbindung mit Verankerungen in Porenbeton haben ergeben, dass ein optimales Konusverhältnis gegeben ist, wenn bei 100 mm Bohrlochtiefe ein Lochradius von 50 mm erhalten wird. Dies entspricht einem Anstellwinkel von ca. 27° gegenüber der Bohrlochachse. Durch die Schrägstellung des Bohrers innerhalb der Führungswände weitet sich das zentrisch gebohrte Loch an der Oberkante der Wand derart auf, dass zusätzlich zum Bohrlochdurchmesser für die Gewindestange der erforderliche Ringspalt von 1 bis 2 mm für die bestimmungsgemäße Verwendung von Verbundmörtel zur Gewindestange gegeben ist.

Weitere Ausgestaltungen der Erfindung ergeben sich aus den Unteransprüchen und der anschließenden Beschreibung von Ausführungsbeispielen.

Nachstehend werden Ausführungsbeispiele der Erfindung anhand der Zeichnung beschrieben. In der Zeichnung zeigen:

Figur 1 ist eine schematische Darstellung eines Bohrvorgangs zur Herstellung eines Loches mit konischem Hinterschnitt, unter Verwendung der erfindungsgemäßen Vorrichtung;

Figur 2 ist eine graphische Darstellung der Erfindung, die den Einfluß der verschiedenen Abmessungen der erfindungsgemäßen Vorrichtung auf den Bohrvorgang erkennen läßt.

Figur 4 zeigt ein erstes Ausführungsbeispiel der Erfindung im Grundriß, Aufriß, Seitenriß und in perspektivischer Darstellung.

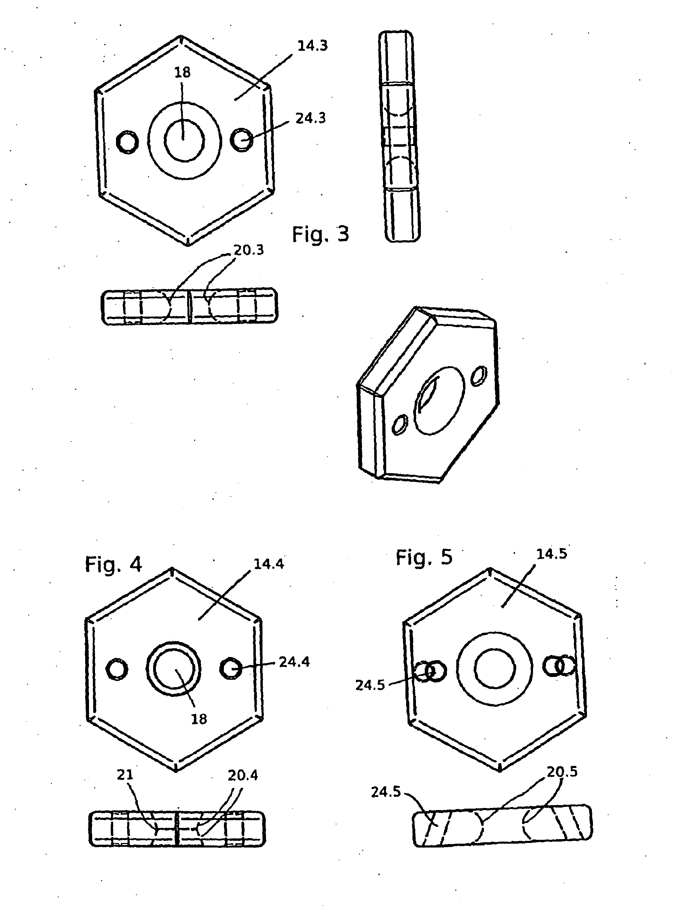

Die Figuren 3 und 5 bis 10 zeigen weitere Ausführungsbeispiele, bei denen die Führungswände nicht erfindungsgemäß ausgebildet sind.

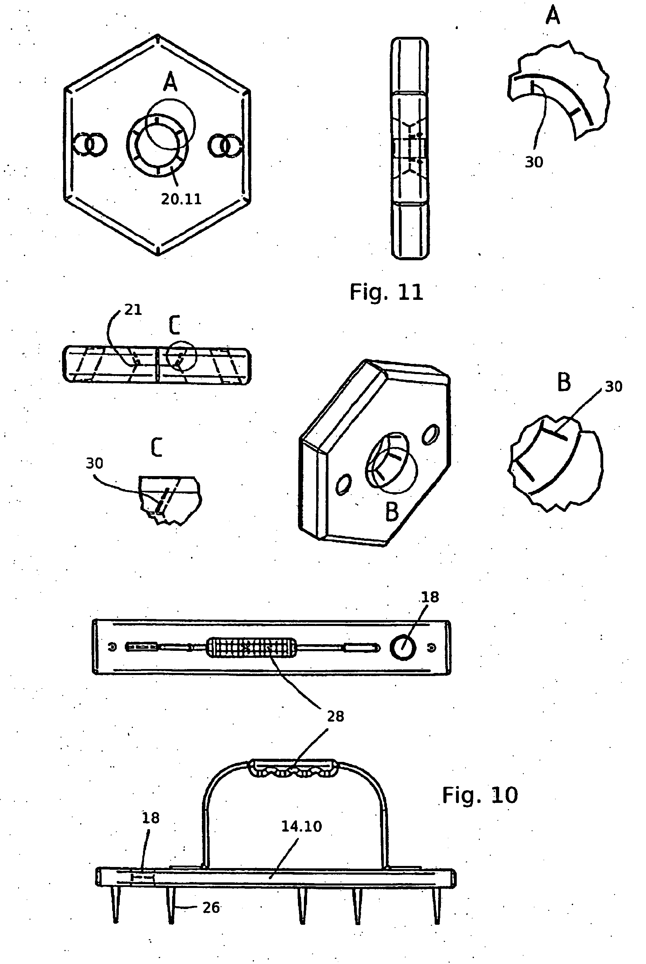

Figur 11 zeigt in verschiedenen Ansichten und Teilansichten ein Ausführungsbeispiel der erfindungsgemäßen Vorrichtung, mit einer Kontrolleinrichtung für die Bohrerführung.

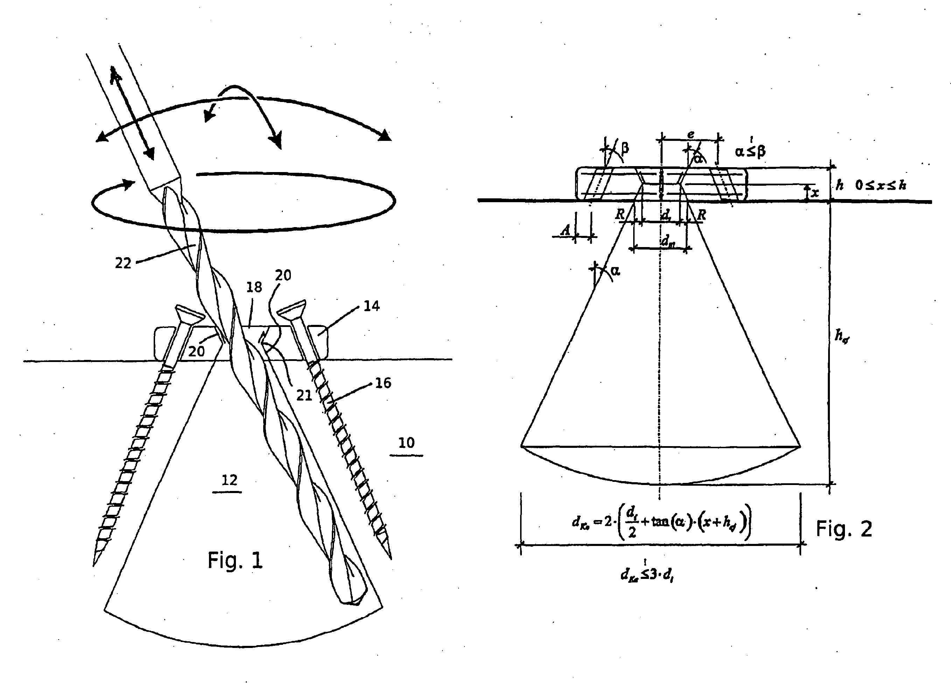

In Figur 1 ist mit dem Bezugszeichen 10 eine Wand, beispielsweise aus Porenbeton bezeichnet, in der ein Loch 12 mit konischem Hinterschnitt eingebohrt wird. An die Wand wird die erfindungsgemäße Vorrichtung 14 angelegt und manuell gehalten oder wie in Figur 1 dargestellt, durch Fixierungsstifte 16 gehalten. Die als Anlageplatte ausgebildete Vorrichtung 14 weist eine Durchgangsöffnung 18 mit Führungswänden 20 auf, die als Doppelkonus ausgebildet sind, der in der Mittelebene eine Knickkante 21 aufweist. Mit einem gewöhnlichen Spiralbohrer 22 wird zunächst ein Loch koaxial zur Durchgangsöffnung 18 senkrecht in die Wand 10 eingebohrt, und dann wird die Bohrmaschine derart geführt, dass der Bohrer 22 die in Pfeilrichtung angegebenen Stellbewegungen durchführt. Dabei gleitet der Bohrer 22 an den Führungswänden 20 entlang. Durch die Schrägstellung der Führungswände wird der Konuswinkel des Hinterschnittes bestimmt. In dieses so hergestellte hinterschnittene Bohrloch 12 wird ein Verankerungsglied, beispielsweise eine Gewindestange eingesetzt und durch Injektion eines Verbundmörtels festgelegt, der beispielsweise aus Vinylester oder Polyesterharz bestehen kann.

Gemäß dem Ausführungsbeispiel nach Figur 3 besteht die Vorrichtung aus einer sechseckigen Anlageplatte 14.3, bei der die Führungswände 20.3 des Durchgangsloches 18 ballig ausgeführt sind. Die Fixierungslöcher 24.3 für die Fixierungsstifte verlaufen parallel zur Bohrungsachse. Die polygonale Form der Anlageplatte ermöglicht das Einschieben in eine entsprechend ausgebildete Wasserwaage oder ein anderes Werkzeug, das mit Schiebereglern ausgerüstet ist.

Bei dem Ausführungsbeispiel nach Figur 4 ist die polygonal ausgebildete Anlageplatte 14.4 mit einer Durchgangsöffnung 18 ausgestattet, deren Führungswände 20.4 doppeltkonisch ausgebildet sind. Die Fixierungslöcher 24.4 verlaufen senkrecht zur Wandebene und dienen zur Aufnahme von Fixierungsstiften, deren Länge begrenzt sein muß, damit sie nicht in Berührung mit dem Bohrer gelangen.

Die Anlageplatte 14.5 gemäß Figur 5 entspricht in der Ausbildung der Führungswände 20.5 dem Ausführungsbeispiel nach Figur 3. Die Fixierungslöcher 24.5 sind schräggestellt, wobei der Anstellwinkel zweckmäßigerweise gleich oder größer ist als der Konuswinkel des Hinterschnittes.

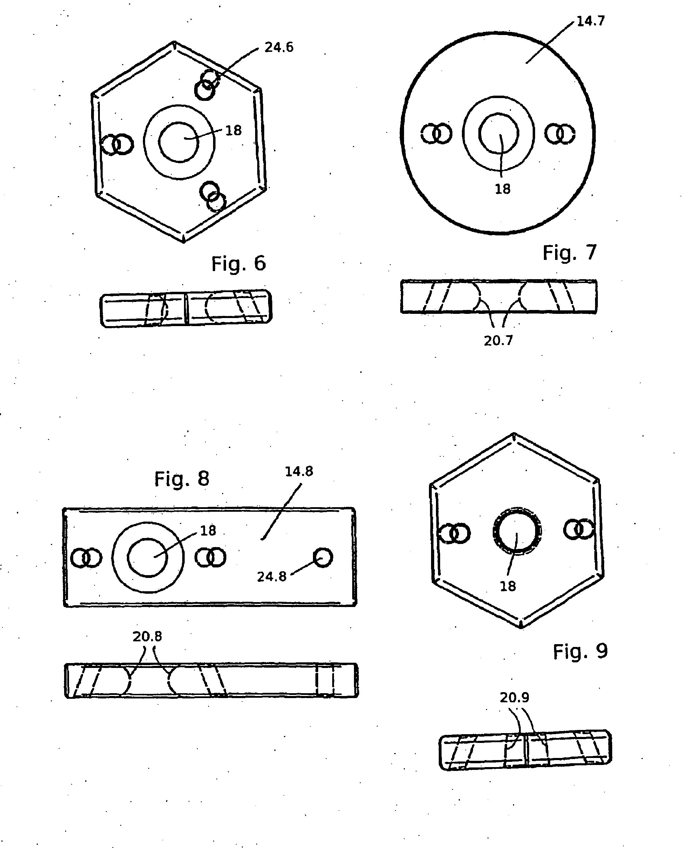

Bei dem Ausführungsbeispiel nach Figur 6 sind im gleichen Winkelabschnitt um die zentrale Bohrung 18 herum drei Fixierungslöcher 24.6 angeordnet, die schräggestellt sind.

Bei dem Ausführungsbeispiel nach Figur 7 ist die Anlageplatte kreisrund ausgeführt und die Durchgangsöffnung 18 weist gewölbte Führungswände 20.7 auf.

Gemäß Figur 8 ist die Anlageplatte 14.8 rechteckig ausgeführt, wobei eine größere Anzahl von Fixierungslöchern 24.8 vorgesehen werden kann. Die Führungswände 20.8 sind ballig ausgeführt. Die Anlageplatte 14.8 kann beispielsweise mit einer Wasserwaage kombiniert sein.

Bei dem Ausführungsbeispielen nach Figur 3 bis 8 (sowie 10 und 11) liegt die Kippkante 21 der Führungswände derart, dass der Bohrer im unteren und im oberen Teil der Führungswände auf zwei gegenüberliegenden Mantellinien geführt wird. Daher ist es gleich, mit welcher Seite die Platte 14 der Wand angelegt wird.

Beim Ausführungsbeispiel nach Figur 9 ist die Bohrloch-Führungswandung 20.9 durchgehend konisch verjüngt ausgebildet, was bedingt, dass die Platte mit dem größeren Durchmesser der konischen Bohrung auf die Wand aufgesetzt werden muß.

Bei dem Ausführungsbeispiel nach Figur 10 weist die Vorrichtung eine rechteckige Anlageplatte 14.10 auf, die an der Anlageseite feste Dorne 26 aufweist, so dass die Anlageplatte mit einem kräftigen Schlag an der Wand vorübergehend festgelegt werden kann. Zur Erleichterung der Handhabung ist ein Handgriff 28 vorgesehen.

Figur 11 zeigt eine Ausführungsform mit einer Bohrkontrolle. Dabei sind die Führungswände 20.11 doppeltkonisch ausgebildet. Sie könnten jedoch auch ballig oder in irgendeiner anderen Form gestaltet sein. Die Bohrkontrolle soll gewährleisten, dass der Bohrer bei der Herstellung der Hinterschnittbohrung über den gesamten Umfang geführt wird, so dass ein möglichst gleichmäßiger Kegel ausgefräst wird. Der Bohrer muß also mindestens einmal über den gesamten Umfang der Führungswände geführt werden. Um dies kontrollieren zu können sind die Führungswände 20.11 mit Markierungen 30 versehen (vergleiche die Teilansichten A, B und C in Figur 11), die der Bohrer abkratzt, wenn er ordnungsgemäß darüber geführt wird.

Diese Markierungen können als Rippen ausgebildet sein, die der Bohrer bei seinem Lauf abkratzt. Diese Rippen bilden sich bei einer Kunststoffausführung an. Bei einer metallischen Ausführung können die Führungswände mit einem Farbanstrich versehen werden, oder es sind auswechselbare Kunststofflippen vorgesehen, so dass die Kontrolleinrichtung auch mehrfach benutzbar ist.

Nach Anlegen der erfindungsgemäßen Vorrichtung kann die Hinterschnittbohrung wie folgt hergestellt werden:

Es wird zunächst ein senkrechtes Bohrloch hergestellt. Anschließend wird die Bohrmaschine im Uhrzeigersinn "gerührt", und zwar zunächst mit kleinen Winkelausschlägen, wobei durch die Drehbewegung des Spiralbohrers das Bohrmehl aus dem Bohrloch nach oben gefördert wird. Der Anstellwinkel wird allmählich vergrößert, bis durch Anlage des Bohrers an den Führungswänden eine weitere Schrägstellung verhindert wird. Durch die Erfindung wird demgemäß gewährleistet, dass der Hinterschnitt bis zu einem vorbestimmten Konuswinkel ausgeführt wird, und zwar gleichmäßig, um die Bohrachse herum.

Um eine vorbestimmte maßgenaue Hinterschnittbohrung durchzuführen, muß der Durchmesser des Bohrers auf die Vorrichtung abgestimmt sein. Die Vorrichtung selbst ist entsprechend den gewünschten Hinterschnittbohrungen zu führen. Die hierbei zu berücksichtigenden geometrischen Abmessungen ergeben sich aus Figur 2. Der Durchmesser $d_{Ke}$ wird größer, wenn die Dicke h der Anlageplatte größer wird. Der Durchmesser $d_{Ke}$ ist maßgeblich von h abhängig.

Die Verankerungstiefe $h_{ef}$ muß mit bauüblichen Verankerungstiefen abgedeckt werden, beispielsweise bei der Verankerung einer Gewindestange M10 in Verbundmörtel in Porenbeton hat nach derzeitigem Stand der Technik eine Verankerungstiefe $h_{ef}$ = 85 mm. Versuche haben gezeigt, dass $d_{Ke}$ mindestens drei mal den Bohrhilfe-Innendurchmesser $d_i$ besitzen sollte, damit bei erfolgter Montage mit Verbundmörtel die Auszugslast gegenüber zentrisch gebohrten Bohrlöchern deutlich vervielfacht werden kann.

$$d_{Ke} \leq 3 \cdot d_i$$

Das Maß x kann, je nach Konstruktionsart, beliebig sein zwischen

$$0 \leq x \leq h$$

Dabei beträgt die Dicke h der Platte zweckmäßig wenigstens 10 mm.
Der Abstand e muss so gewählt sein, dass der nach oben stehende Kopf des Fixierstiftes nicht in Kollision mit dem Bohrer geraten kann.

Da es vorteilhaft sein kann, die Fixierstifte nach außen hin schräg laufen zu lassen, muß β so gewählt sein, dass rings um die Fixierstiftführung genügend Material mit dem Maß A vorhanden ist. Voraussetzung ist, dass das Außenmaß bzw. die Außengeometrie der Bohrhilfe begrenzt ist, z.B. weil die Außengeometrie angepasst ist, damit sie als Teil in eine Wasserwaage eingesetzt werden kann.

Da es dem Anwender überlassen ist, welche Fixierungselemente er nimmt und es daher nicht auszuschließen ist, dass die Fixierstifte lang sein können, muss an den Neigungswinkel α der Bohrerführung die Forderung gestellt werden, dass α nicht größer ist als der Neigungswinkel der Fixierstifte mit dem Winkel β.

$$\alpha \leq \beta.$$

Dabei muß α aber einen Mindestneigungswinkel besitzen, damit die Forderung $d_{Ke} \leq 3 \cdot d_i$ erfüllt wird.

Das Maß R ist so zu gestalten, dass der entstehende Ringspalt genügend groß ist, bzw. dass sich eine Kunststoffzentrierhülse in das Bohrloch einsetzen lässt, welche die einzumörtelnde Gewindestange zentriert und einen optisch ansprechenden Bohrlochabschluß darstellt.

Bezugszeichenliste

| 10 | Wand aus Porenbeton |
|----|---------------------|
| 12 | Loch konischer Hinterschnitt |
| 14 | Vorrichtung Anlageplatte |
| 16 | Fixierungsstifte |
| 18 | Durchgangsöffnung |

20    Führungswand
21    Kippkante
22    Spiralbohrer
24    Fixierungslöcher
26    Dorne
28    Handgriff
30    Markierungen

**Patentansprüche**

1.  Vorrichtung zum Bohren eines Loches mit konischem Hinterschnitt, bestehend aus einer Anlageplatte (14), die eine Bohrerdurchgangsbohrung (18) aufweist, **dadurch gekennzeichnet, daß** deren Innenwand als doppelt konische Bohrerführungswand (20) ausgebildet ist, die einen oberen konisch nach einer Kippkante (21) verjüngten Abschnitt und einen unteren sich von der Kippkante (21) konisch erweiternden Abschnitt aufweist und die Konuswinkel (α) beider Abschnitte dem Konuswinkel (α) des zu bohrenden Hinterschnittloches entsprechen.

2.  Vorrichtung nach Anspruch 1,
    **dadurch gekennzeichnet, dass** die Anlageplatte (14) polygonal ausgebildet ist.

3.  Vorrichtung nach Anspruch 1,
    **dadurch gekennzeichnet, dass** Fixierungslöcher (24) in der Platte (14) vorgesehen sind.

4.  Vorrichtung nach Anspruch 3,
    **dadurch gekennzeichnet, dass** die Fixierungslöcher schräg verlaufend ausgebildet sind.

5.  Vorrichtung nach Anspruch 1,
    **dadurch gekennzeichnet, dass** die Anlageplatte rechteckig ausgebildet und mit einer Wasserwaage kombiniert ist.

6.  Vorrichtung nach Anspruch 1,
    **dadurch gekennzeichnet, dass** die Anlageplatte (14.10) einen Handgriff (28) trägt.

7.  Vorrichtung nach Anspruch 6,
    **dadurch gekennzeichnet, dass** die Anlageplatte Fixierungsdome (26) trägt.

8.  Vorrichtung nach Anspruch 1,
    **dadurch gekennzeichnet, dass** die Führungswand (20) Markierungen (30) trägt.

9.  Vorrichtung nach Anspruch 8,
    **dadurch gekennzeichnet, dass** die Markierungen aus umfangsmäßig verteilten Rippen bestehen.

10. Vorrichtung nach Anspruch 8,
    **dadurch gekennzeichnet, dass** die Markierungen aus einem Farbauftrag bestehen.

11. Vorrichtung nach Anspruch 1,
    **dadurch gekennzeichnet, dass** die Anlageplatte (14) aus Kunststoff besteht.

12. Vorrichtung nach Anspruch 1,
    **dadurch gekennzeichnet, dass** die Anlageplatte (14) aus Metall besteht.

13. Vorrichtung nach Anspruch 1,
    **dadurch gekennzeichnet, dass** die Durchgangsbohrung unrund, zum Beispiel polygonal oder schlitzförmig, ausgebildet ist.

**Claims**

1.  A device for drilling a hole having a conical undercut, comprising a support plate (14) having a through bore (18) for a drill, **characterised in that** the inside wall of the through bore is in the form of a double-conical drill guide wall (20) having an upper portion which is conically narrowed towards a tilt edge (21) and a lower portion which conically enlarges from the tilt edge (21) and the cone angles (α) of both portions correspond to the cone angle (α) of the undercut hole to be drilled.

2.  A device according to claim 1 **characterised in that** the support plate (14) is of a polygonal configuration.

3.  A device according to claim 1 **characterised in that** there are provided fixing holes (24) in the plate (14).

4.  A device according to claim 3 **characterised in that** the fixing holes extend inclinedly.

5.  A device according to claim 1 **characterised in that** the support plate is of a rectangularconfiguration and is combined with a spirit level.

6.  A device according to claim 1 **characterised in that** the support plate (14, 10) carries a handle (28).

7.  A device according to claim 6 **characterised in that** the support plate carries fixing spikes (26).

8.  A device according to claim 1 **characterised in that** the guide wall (20) carries markings (30).

9.  A device according to claim 8 **characterised in that** the markings comprise peripherally distributed ribs.

10. A device according to claim 8 **characterised in that** the markings comprise a paint application.

11. A device according to claim 1 **characterised in that** the support plate (14) comprises plastic material.

**12.** A device according to claim 1 **characterised in that** the support plate (14) comprises metal.

**13.** A device according to claim 1 **characterised in that** the through bore is of a non-round configuration, for example polygonal or slit-shaped.

**Revendications**

**1.** Dispositif pour percer un trou à contre-dépouille conique, constitué d'une plaque d'application (14) qui présente un perçage traversant (18) pour foret, **caractérisé en ce que** la paroi intérieure dudit perçage est réalisée sous forme de paroi de guidage de foret (20) à double conicité, qui présente une partie supérieure rétrécie coniquement vers une arête de basculement (21) et une partie inférieure s'élargissant coniquement à partir de l'arête de basculement (21), et les angles de cône (α) des deux parties correspondent à l'angle de cône (α) du trou à contre-dépouille à percer.

**2.** Dispositif selon la revendication 1, **caractérisé en ce que** la plaque d'application (14) est réalisée polygonale.

**3.** Dispositif selon la revendication 1, **caractérisé en ce que** des trous d'immobilisation (24) sont prévus dans la plaque (14).

**4.** Dispositif selon la revendication 3, **caractérisé en ce que** les trous d'immobilisation sont réalisés à allure oblique.

**5.** Dispositif selon la revendication 1, **caractérisé en ce que** la plaque d'application est réalisée rectangulaire et est combinée à un niveau à bulle.

**6.** Dispositif selon la revendication 1, **caractérisé en ce que** la plaque d'application (14, 10) porte une poignée (28).

**7.** Dispositif selon la revendication 6, **caractérisé en ce que** la plaque d'application porte des dômes d'immobilisation (26).

**8.** Dispositif selon la revendication 1, **caractérisé en ce que** la paroi de guidage (20) porte des repères (30).

**9.** Dispositif selon la revendication 8, **caractérisé en ce que** les repères consistent en des nervures réparties sur la circonférence.

**10.** Dispositif selon la revendication 8, **caractérisé en ce que** les repères consistent en une application de peinture.

**11.** Dispositif selon la revendication 1, **caractérisé en ce que** la plaque d'application (14) est réalisée en matière plastique.

**12.** Dispositif selon la revendication 1, **caractérisé en ce que** la plaque d'application (14) est réalisée en métal.

**13.** Dispositif selon la revendication 1, **caractérisé en ce que** le perçage traversant est réalisé non rond, par exemple polygonal ou en forme de fente.

$h \quad 0 \le x \le h$

$\alpha \le \beta$

$$d_{Kx} = 2 \cdot \left( \frac{d_1}{2} + \tan(\alpha) \cdot (x + h_d) \right)$$

$$d_{Kx} \le 3 \cdot d_1$$

Fig. 2

14

16

18

20

20

21

22

10

12

Fig. 1

Fig. 3

Fig. 4

Fig. 5

24.6

18

Fig. 6

14.7

18

Fig. 7

20.7

Fig. 8

14.8

18

24.8

20.8

18

24.8

14.8

Fig. 9

20.9

Fig. 11

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 343879 B
- DE 2743778 A